# EUROPEAN PATENT APPLICATION

(11) **EP 4 790 072 A1**
(43) Date of publication of application: **12.08.2026**
(21) Application number: 25156666.7
(22) Date of filing: 07.02.2025
(51) Int. Cl.: C08F 6/00, C08F 2/34, B01J 8/24, C08F 10/00

(54) **PROCESS AND PLANT FOR PRODUCING A POLYOLEFIN**

(71) Applicant: Basell Poliolefine Italia S.r.l., 20121 Milano (IT)
(72) Inventor: VITALE, Francesco, 44122 Ferrara (IT); BALESTRA, Enrico, 44122 Ferrara (IT); DI FEDERICO, Pier Luigi, 44122 Ferrara (IT); ZANDEGIACOMO RIZIO, Anna, 44122 Ferrara (IT); MACCABIANI, Guido, 44122 Ferrara (IT); PENZO, Giuseppe, 46010 Curtatone (MN) (IT); DORINI, Maurizio, 44122 Ferrara (IT); RINALDI, Riccardo, 44122 Ferrara (IT)
(74) Representative: LyondellBasell

(57) **Abstract**

A process and a plant for producing a polyolefin obtained by polymerization of propylene; the process comprises: a reaction step, during which the propylene reacts in a polymerization reactor so as to obtain a said polyolefin; a stripping step, during which said polyolefin is contacted with a counter-current flow of saturated steam in a stripping device so as to strip away gases from said polyolefin; a purification step, which takes place at in a purification assembly and during which CO, CO₂ and alcohols are separated from said gasses so as to obtain a stream of treated gases; and a recycle step, during which the stream of treated gasses is fed to the polymerization reactor.

## Description

### TECHNICAL FIELD

The present invention relates to a process and a plant for producing a polyolefin.

### BACKGROUND OF THE INVENTION

Gas-phase polymerization processes are economical processes for the preparation of polyolefins such as homopolymers of ethylene or propylene or copolymers of ethylene or propylene with other olefins. Fluidized-bed reactors for carrying out such processes have been known for a long time. These reactors contain a bed of polymer granules which is maintained in a fluidized state by an upward flow of a fluidizing gas. Customary reactors comprise, *inter alia,* a reactor space in the form of an inner chamber of a vertical cylinder. These reactors have a recycle gas line, in which coolers for removing the heat of polymerization, a recycle gas compressor and, if desired, further elements such as a cyclone for removing fine polymer dust are installed. Monomers consumed by the polymerization reaction are normally replaced by adding make-up gas to the recycle gas stream.

The use of catalysts with high activity and selectivity of the Ziegler-Natta type and, more recently, of the metallocene type has led to the widespread use on an industrial scale of processes in which the olefin polymerization is carried out in a liquid-phase or a gas-phase in the presence of a solid catalyst. A Ziegler-Natta catalyst comprises a solid catalytic component based on a transition metal compound, such as a titanium tetrachloride, and an organometallic compound acting as the catalyst activator, such as an aluminium alkyl compound.

Several reactions for polymerizing different olefins may be catalyzed by a Ziegler-Natta catalyst, thus producing homopolymers, copolymers or terpolymers. The obtained polymers contain residues of catalyst components, a certain quantity of unreacted monomers and other compounds.

Currently, a relatively high amount of the unreacted monomers is to be purged from the plant and it is not possible to recycle them in high quantity since, if this is done, the performance of the plant is impaired and/or the quality of the produced polymer is affected.

The object of the present invention is to provide a process and a plant for producing polyolefin that allow the drawbacks of the known art to be at least partially overcome, and which are, at the same time, simple and inexpensive to implement.

### SUMMARY

According to the invention there is provided a process and a plant for producing a polyolefin according to the appended independent claims and, preferably, according to any one of the claims directly or indirectly depending on the independent claims.

### BRIEF DESCRIPTION OF THE FIGURES

The invention is hereinafter described with reference to the accompanying drawing, which depicts a non-limiting embodiment thereof, wherein:

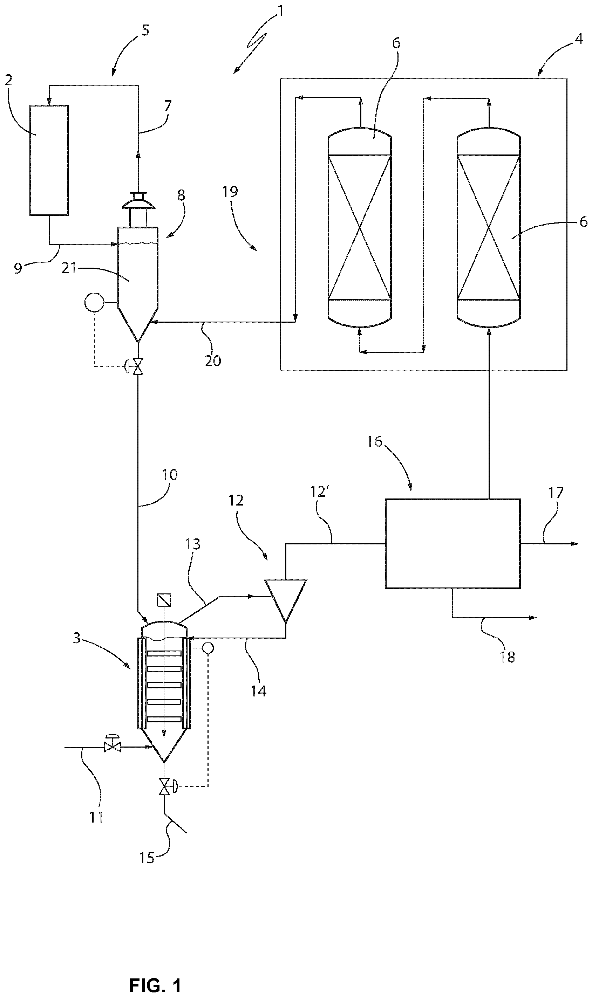

- figure 1 is schematic and side view of a fluidized-bed reactor in accordance with the invention.

### DETAILED DESCRIPTION

In accordance with a first aspect of the present invention, in figure 1, the numeral 1 indicates as a whole a plant for producing of a polyolefin, which is either a propylene copolymer or homopolymer. The plant 1 comprises: a polymerization reactor 2 (in particular, containing a catalyst) configured to make one or more α-olefins (i.e. 1-olefins) react so as to obtain (granules of) the polyolefin; a stripping device 3 configured to contact the polyolefin with a counter-current flow of saturated steam so as to strip away gases from the (granules of) polyolefin, and, in particular, so as to form condensed steam on the (granules of) polyolefin; a purification assembly 4 configured to separate CO, CO₂ and alcohols from the gasses so as to obtain a stream of treated gases (in which the concentration of CO, CO₂ and alcohols is reduced, in particular, to a negligible amount); and a recycle system configured to feed the stream of treated gases (back) to the polymerization reactor 2.

In this way, it has been experimentally observed that it is possible surprisingly to recycle the monomers in high quantity with a low effect on the performance of the plant and/or the quality of the produced polymer. It has been thought that this result has been achieved because the presence of undesired compounds (which may poison the catalyst or dilute the propylene) in the stream of treated gases is lowered before such a stream is fed back to the polymerization reactor 2.

The α-olefins are hydrocarbons having terminal double bonds, without being restricted thereto. Preference is given to nonpolar olefinic compounds. Particularly preferred 1-olefins are linear or branched C₂-C₁₂ 1-alkenes, in particular linear C₂-C₁₀ 1-alkenes such as ethylene, propylene, 1-butene, 1-pentene, 1-hexene, 1-heptene, 1-octene, 1-decene or branched C₂-C₁₀ 1-alkenes such as 4-methyl-1 -pentene, conjugated and nonconjugated dienes such as 1,3-butadiene, 1,4-hexadiene or 1,7-octadiene.

In particular, the α-olefins comprise (consist) mainly of propylene (propylene is more than 50 wt.%; more in particular, is more than 60 wt.%). Preferred comonomers in propylene polymerization are up to 40 wt.% of ethylene, 1-butene and/or 1-hexene, preferably from 0.5 wt.% to 35 wt.% of ethylene, 1-butene and/or 1-hexene.

Advantageously but not necessarily, the α-olefins consist of propylene and up to 10 wt.% (in particular, up to 9 wt.%) of butene and/or up to 25 wt.% of ethylene. In particular, α-olefins consist of propylene and (up to 25 wt.%) of ethylene; for example, the α-olefins consist of propylene and ethylene. In some specific but not limiting cases, the α-olefins consist of propylene.

The weight percentages (wt.%) above are with respect to the overall weight of the α-olefins.

In this text, unless otherwise specified, "Cₓ-C_{y}" refers to a group and/or a compound which is intended having x to y carbon atoms.

According to some preferred but not limiting embodiments, the polymer is either propylene homopolymer or a propylene copolymer with ethylene (up to 25 wt.% with respect to the total weight of the polymer). In some specific but not limiting cases, the polymer is propylene homopolymer.

In order to avoid doubts about how the process works, please note that the stream of treated gasses contains (mainly consists of) unreacted (one or more) α-olefins (propylene). Therefore, the recycling of such (one or more) α-olefins makes it possible for them to further react and, thus, reduces the need to purge unreacted monomers from the plant 1.

In particular, the purification assembly 4 is also configured to separate water from the gasses (stripped away from the polyolefin by the stripping device 3). This further lowers the effect of the recycling to the performance of the reactor 2 and the quality of the product.

Advantageously but not necessarily, the purification assembly 4 comprises at least one adsorbent. In particular, the adsorbent/s is/are selected within those commercially available and capable of taking away (in particular, adsorbing) the required compounds (CO, CO₂, alcohols and possibly water) selectively with respect to the (one or more) α-olefins (in particular, the propylene).

More in particular, the adsorbent/s has/have a majority of pores with a size from about 2 (in particular, from about 3) to about 5 (in particular, to about 4) Angstrom. More precisely but not compulsorily, the adsorbent is selected in the group consisting of: molecular sieves, alumina (and a combination - in particular, a mixture - thereof). According to some specific but not limiting embodiments, the adsorbent comprises (consists of) molecular sieves.

The pore size distribution of the adsorbent/s may be measured by means of a gas adsorption technique, for example using the HK method (Horvath, G., Kowazoe, K. (1983). Method for the calculation of effective pore size distribution in molecular sieve carbon. J. Chem. Eng. Jpn., 16(6), pp. 470-475).

Examples of alumina that may be used are Selexsorb^{®} CDL (which is capable of adsorbing alcohols, carbonyls, ethers and carboxylic acids from olefinic streams) and/or Selexsorb^{®} COS*i* (which is capable of adsorbing CO, CO₂, H₂S and H₂O from olefinic streams).

Molecular sieves may be obtained, for example, form BORFIND^{®} and/or Delta Adsorbents. According to specific and non-limiting embodiments, combinations of 3A Molecular Sieve (Typical Formula: K₁₂ [(Al0₂)₁₂(SiO₂)₁₂] · nH₂O) and 4A Molecular Sieve (Typical Formula: Na₁₂[(AlO₂)₁₂(SiO₂)₁₂] • nH₂O) (both marketed by Delta Adsorbents) may be considered.

Advantageously but not necessarily, the purification assembly 4 comprises (one or) two towers 6 containing the adsorbent. In particular, the purification assembly 4 also includes facilities (not depicted) for regenerating the adsorbent. According to some non-limiting embodiments, the purification assembly 4 comprises more than two towers 6.

Merely illustrative and non-limiting examples of the polymerization reactor 2 and its functioning are disclosed in one or more of the following patent applications: US20200031957A1, US20110054127A1, US2018178180A1, WO 97/04015 A1, and WO 00/02929 A1.

In particular, the polymerization reactor 2 discharge the polyolefin in the form of granules together with unreacted monomer (propylene) particles of catalyst and other pollutants.

Advantageously but not necessarily, the recycle system 5 includes a line 7 connecting the purification assembly 4 to (an upper portion of) the polymerization reactor 2 and possibly a compressor (not depicted in the figure). According to some specific but non-limiting embodiments, the compressor is positioned upstream of the purification assembly 4 (with respect to the polymerization reactor 2); in other words, in these cases, the purification assembly 4 is located between the compressor and the polymerization reactor 2.

Advantageously but not necessarily, the plant 1 also comprises a flash separator 8, which is configured to separate at least a portion of gas (mainly consisting of unreacted α-olefins - propylene), which is together with the (granules of) polyolefin discharged from the polymerization reactor 2, from the polyolefin. In particular, the flash separator 8 is located downstream of the polymerization reactor 2 and upstream of the stripping device 3.

In particular, the polymerization reactor 2 is connected to the flash separator 8 via a line 9 and line 7. More precisely, in actual use, the (granules) of polyolefin are fed to the flash separator 8 through line 9 and the gas portion separated by the flash separator 8 is conveyed back to the polymerization reactor 2 through line 7 (connected to an upper portion of the flash separator 6).

According to some non-limiting embodiments, if crystalline polymers are treated in the flash separator 6, a temperature of about 100-110°C may be reached, on the other hand if very sticky polymers are treated, the temperature may be maintained at about 60-90°C. In any case, the temperature in the flash separator 6 is kept at values such to avoid the softening of the polymer powder. Owing to the above mentioned operative conditions, a part of the gaseous phase present together the (granules) of polyolefin, mainly unreacted monomers, are volatilized from the solid polymer.

In particular, the portion of gas separated from the (granules) of polyolefin leaves the flash separator 8 through the gas line 7 from the upper portion of the flash separator 6, and is recycled by the recycle system 5 to the polymerization reactor 2 after compression, whereas the (granules) of polyolefin leaves the lower portion of the flash separator 8 via a feed line 10 and is fed to (an upper portion of) the stripping device 3.

More in particular, the plant 1 comprises a steam line 11, through which a saturated stream of steam is fed to (a lower portion of) the stripping device 3.

Advantageously but not necessarily, the plant 1 also comprises a remover 12 (in particular, a cyclone), which is configured to remove solid (fine) particles (including polymer small granules and catalyst residues) from the gasses coming from the stripping device 3 (via a line 13). Preferably, such fine particles are reintroduced in the stripping device 3 (via a line 14).

In particular, in actual use, the volatile gasses released from the polyolefin at the stripping device 3, are extracted from an upper portion of the stripping device 3 (and fed to the remover 12) via line 13. A purified polyolefin (polypropylene) is discharged from the bottom of the stripping device 3 via a line 15.

Advantageously but not necessarily, the plant 1 also comprises a condenser 16, which is configured to reduce the water vapor content in the gasses coming from the stripping device 3 (through a line 12'). According to some non-limiting embodiments, the condensed fraction is fed to a gravity separator in which the high molecular weight hydrocarbons are separated from the aqueous phase and discharged through line 17. The aqueous phase can be discharged via line 18 in a water reservoir, preferably after being purified from the presence of residual hydrocarbons.

Advantageously but not necessarily, the plant 1 (in particular, the recycle system 5) comprises a feeding assembly 19 configured to feed the stream of treated gases from the purification assembly 4 to the flash separator 8.

It has been experimentally observed that, in this way, recycling the monomers in high quantity has even a lower effect on the performance of the plant and/or the quality of the produced polymer. It has been thought that this result has been achieved because the presence of undesired compounds in the stream of treated gases is further lowered before such a stream is fed back to the polymerization reactor 2.

According to some non-limiting embodiments, the feeding assembly 19 comprises at least one line 20 located between the purification assembly 4 and the separator 8 and possibly a compressor (not depicted in the figure). In particular, the flash separator 8 comprises a separator vessel 21; the feeding assembly 19 configured to feed the stream of treated gases to a lower portion of the separator vessel 21. The line 7 (of the recycle system 5) is connected to an upper portion of the separator vessel 21 and is configured to feed the stream of treated gases from the flash separator 8 to the polymerization reactor 2. Please note that in these cases, in particular, the recycle system 5 comprises (not only line 7 but also) the feeding assembly 19 (more precisely, line 20) and the flash separator 8.

According to non-limiting and not depicted embodiments, the purification assembly 4 is directly connected to the polymerization reactor 2 (through only line 7). In other words, in actual use, the treated gases coming from the purification assembly 4 is fed directly to the polymerization reactor 2 without going through the flash separator 8. In particular, in such cases a branching of the line 7 connects the flash separator 8 to the main part of line 7 (extending from purification assembly 4 to reactor 2) and, thus, to the reactor 2.

In accordance with a second aspect of the present invention, there is provided a process of producing a polyolefin (which is either a propylene copolymer or homopolymer); the process comprises:
a reaction step, during which the one or more α-olefins react in a polymerization reactor 2 so as to obtain the (granules of) polyolefin (in particular, by means of a polymerization catalyst);
a stripping step, during which said polyolefin is contacted with a counter-current flow of saturated steam in a stripping device 3 so as to strip away gases from said polyolefin (and, in particular, so as to form condensed steam on the granules of said polyolefin);
a purification step, which takes place at (in) a purification assembly 4 and during which CO, CO₂ and alcohols are separated from the above mentioned gasses (as the gasses pass through separation assembly 4) so as to obtain a stream of treated gases; and
a recycle step, during which the stream of treated gasses is fed (back) to the polymerization reactor 2.

The polymerization process herein described is not restricted to the use of any particular family of polymerization catalysts. The process can be implemented for any exothermic polymerization reaction employing any catalyst, whether it is supported or unsupported, and regardless of whether it is in pre-polymerized form.

According to some non-limiting embodiments, the polymerization reaction can be carried out in the presence of highly active catalytic systems, such as Ziegler-Natta catalysts, single site catalysts (metocene), chromium-based catalysts, vanadium-based catalysts.

According to some non-limiting embodiments, the polymerization reaction can be carried out either in liquid phase or in gas phase.

In particular, the polymer and/or the (one or more) α-olefins are as defined above (in accordance with the first aspect of the present invention).

Advantageously but not necessarily, during the purification step, water is also separate from the gasses (stripped away from the polyolefin by the stripping device 3). This further lowers the effect of the recycling to the performance of the reactor 2 and the quality of the product.

In particular, during the purification step, the concentration of CO, CO₂, water, and alcohols is significantly reduced. More precisely but not compulsorily, during the purification step, most (ideally but not necessarily, all) of the CO, CO₂, water, and alcohols is separated from the gasses (the monomers)

Advantageously but not necessarily, the purification assembly 4 comprises at least one adsorbent; during the purification step the gasses are contacted with the adsorbent. In particular, the adsorbent is selected in the group consisting of: molecular sieves, alumina and a combination (a mixture) thereof.

In particular, the adsorbent is as specified above in relation with the first aspect of the invention.

Advantageously but not necessarily, the process also comprises a flashing step, which takes place in a flash separator 8 and during which at least a portion of gas (mainly consisting of unreacted α-olefins - in particular, propylene) contained in (flowing with) the polyolefin discharged from the polymerization reactor 2 is separated from the polyolefin; the polyolefin undergoes the flashing step before undergoing the stripping step. In other words, during the flashing step a stream of material containing the polyolefin discharged from the polymerization reactor 2 is fed through the flash separator 8 so that a portion of a gas content of the stream of material is separated from the polyolefin.

Advantageously but not necessarily, during the flashing step, the quantity of gas in (together with) the polyolefin is significantly reduced. More precisely but not compulsorily, during the flashing step, most of the gas (mainly monomers) is separated from the polyolefin.

In particular, the above mentioned (at least a) portion of gas (which mainly consists of unreacted α-olefins - in particular, propylene) is fed (back) to the to the polymerization reactor 2. More in particular, such a feeding of the portion of gas to the polymerization reactor 2, is carried out during the recycle step.

Advantageously but not necessarily, during the recycle step, the stream of treated gas is fed back to the polymerization reactor 2 so as to pass through the flash separator 8 (so that said portion of gas content and the treated gas combine together in a flow of gas which reaches the polymerization reactor 2).

In this way, it is possible to recycle a higher quantity of monomer with higher purity.

According to some non-limiting embodiments, the flash separator 8 comprises a separator vessel 21; during the recycle step, said stream of treated gasses is fed to a lower portion of the separator vessel 21.

Advantageously but not necessarily, the process comprises a separation step, during which the gasses obtained after the stripping step are passed through a (cyclone) remover 13 and solid particles (including polymer granules) are separated from the gasses, the gasses undergo the separation step before undergoing the purification step

Advantageously but not necessarily, the gasses obtained during (by) the stripping step contain water vapor; the process also comprising a condensation step, during which the gasses obtained after the stripping step are thermally treated in a condenser so as to reduce the water vapor; the gasses undergo the stripping step before undergoing the purification step.

Advantageously but not necessarily, the above process is implemented by the plant 1 disclosed above with respect to the first aspect of the present invention.

Alternatively or in addition, the plant 1 disclosed above with respect to the first aspect of the present invention is configured to implement the process in accordance with the second aspect of the present invention.

Unless expressly indicated to the contrary, the content of the references (articles, books, patent applications etc.) cited in this text is recalled in full herein. In particular, the above-mentioned references are incorporated herein by reference.

## Claims

1. A process of producing a polyolefin, which is either a propylene copolymer or homopolymer; the process comprises:
a reaction step, during which one or more α-olefins react in a polymerization reactor (2) so as to obtain a said polyolefin;
a stripping step, during which said polyolefin is contacted with a counter-current flow of saturated steam in a stripping device (3) so as to strip away gases from said polyolefin;
a purification step, which takes place at a purification assembly (4) and during which CO, CO₂, water and alcohols are separated from said gasses so as to obtain a stream of treated gases; and
a recycle step, during which the stream of treated gasses is fed to the polymerization reactor (2).

2. The process according to claim 1, wherein the purification assembly comprises at least one adsorbent; during the purification step said gasses are contacted with the adsorbent; the adsorbent being selected in the group consisting of: molecular sieves, alumina and a combination thereof.

3. The process according to claim 2, wherein the at least one adsorbent has a majority of pores with a size from 2 to 5 Angstrom.

4. The process according to any one of claims 1 to 3, and comprising a flashing step, which takes place in a flash separator (8) and during which at least a portion of gas is separated from the polyolefin discharged from the polymerization reactor; the polyolefin undergoes the flashing step before undergoing the stripping step.

5. The process of claim 4, wherein said at least a portion of gas is fed to the to the polymerization reactor (2).

6. The process of claim 4 or 5, wherein, during the recycle step, said treated gas is fed back to the polymerization reactor (2) so as to pass through the flash separator (8).

7. The process of claim 4 or 5, wherein the flash separator (8) comprises a separator vessel (21); during the recycle step, said stream of treated gasses is fed to a lower portion of the separator vessel (21).

8. The process according to any one of claims 1 to 7, and comprising a separation step, during which the gasses obtained after the stripping step are passed through a remover (12) and solid particles are separated from the gasses, the gasses undergo the separation step before undergoing the purification step.

9. The process according to any one of claims 1 to 8, wherein the gasses obtained during the stripping step contain water vapor; the process also comprising a condensation step, during which the gasses obtained after the stripping step are treated in a condenser (16) so as to reduce the water vapor; the gasses undergo the stripping step before undergoing the purification step.

10. A plant for producing polyolefin, which is either a propylene copolymer or homopolymer; the plant (1) comprises:
a polymerization reactor (2) configured to make one or more α-olefins react so as to obtain said polyolefin;
a stripping device (3) configured to contact said polyolefin with a counter-current flow of saturated steam so as to strip away gases from said polyolefin;
a purification assembly (4) configured to separate CO, CO₂, water and alcohols from said gasses so as to obtain a stream of treated gases; and
a recycle system (5) configured to feed the stream of treated gases to the polymerization reactor (2).

11. The plant according to claim 10, wherein the purification assembly (4) comprises at least one adsorbent.

12. The plant according to claim 10 or 11, wherein the adsorbent is selected in the group consisting of: molecular sieves, alumina (and a combination - in particular, a mixture - thereof).

13. The plant according to any one of claims 10 to 12, and comprising a flash separator (8), which is configured to separate at least a portion of gas from the polyolefin discharged from the polymerization reactor; the flash separator (8) being located downstream of the polymerization reactor (2) and upstream of the stripping device (3); the recycle system is configured to feed said at least a portion of gas to the polymerization reactor (2).

14. The plant according to claim 13, and comprising a feeding assembly configured to feed the stream of treated gases from the to the flash separator (8).

15. The plant according to any one of claims 10 to 14, and configured to implement the method according to any one of claims 1 to 9.
